# EUROPÄISCHE PATENTSCHRIFT

(11) **EP 3 281 791 B1**
(45) Veröffentlichungstag und Bekanntmachung des Hinweises auf die Patenterteilung: **13.10.2021**
(21) Anmeldenummer: 17179238.5
(22) Anmeldetag: 03.07.2017
(51) Int. Cl.: B41F 33/00, B41F 33/02, G06F 3/12, G06T 11/60, G06F 40/106

(54) **MONTAGE EDITOR ZUR HERSTELLUNG VON DRUCKBOGEN**
EDITOR FOR THE PREPARATION OF PRINTED SHEETS
ÉDITEUR DE MONTAGE DESTINÉ À RÉALISER DES FEUILLES IMPRIMÉES

(30) Priorität: 08.08.2016 DE 102016214647
(43) Veröffentlichungstag der Anmeldung: 14.02.2018
(73) Patentinhaber: Heidelberger Druckmaschinen AG, 69115 Heidelberg (DE)
(72) Erfinder: Weinholz, Peter Eduard, 24214 Tüttendorf (DE)

(56) Entgegenhaltungen:
- EP-A1- 2 857 955
- EP-A2- 1 155 850
- EP-A2- 2 390 842
- WO-A1-2014/206496
- US-A1- 2010 164 992
- US-A1- 2010 199 227

## Beschreibung

Die vorliegende Erfindung betrifft ein Verfahren zum Herstellen von Druckprodukten mittels einer Druckmaschine mit einem Rechner, einem Bildschirm und einer Eingabeeinrichtung.

Bevor ein Druckauftrag auf einer Druckmaschine abgearbeitet werden kann, muss dieser Druckauftrag für die Abarbeitung auf der Druckmaschine vorbereitet werden. Dies ist insbesondere dann der Fall, wenn der Druckauftrag über mehrere Seiten verfügt oder mehrere Druckaufträge auf einem Bogen angeordnet werden sollen. Um bei Bogendruckmaschinen die zur Verfügung stehende Bedruckstofffläche möglichst optimal auszunutzen, sollten auf dem zu druckenden Bogen möglichst wenige Bereiche frei bleiben. Außerdem ist zu berücksichtigen, dass mehrere Seiten auf dem zu druckenden Bogen so angeordnet sein sollen, dass sie später besonders leicht und effektiv geschnitten werden können, um das finale Druckprodukt herzustellen. Das Anordnen der Seiten auf einem Bogen für eine Druckmaschine, sei es eine Offset-Druckmaschine oder eine Digital-Druckmaschine, wird üblicherweise als Seitenmontage bezeichnet. Für diese Seitenmontage wird heutzutage üblicherweise eine Software verwendet, welche es dem Bediener ermöglicht, am Bildschirm die Seiten für einen zu druckenden Bogen anzuordnen. Problematisch dabei ist jedoch, dass dem Bedienpersonal meistens die Erfahrung fehlt, wie die Seiten optimal angeordnet werden, so dass zum einen der Bogen möglichst optimal mit Seiten bedeckt ist und zum anderen die Seiten hinterher problemlos geschnitten werden können, um das Druckprodukt fertig zu stellen.

Für das Editieren von Dokumenten in der Vorbereitung des Druckprozesses gibt es bereits Software, welche Hilfestellung anbietet. Eine derartige Software geht aus der Patentanmeldung WO 2004/081811 A2 hervor. Diese Patentanmeldung offenbart eine Software, welche dabei hilft, beim Editieren von Dokumenten die Bereiche zu finden, welche gerade bearbeitet werden. Dazu werden die betroffenen Bereiche, welche bearbeitet werden, optisch herausgehoben, so dass dem Benutzer immer klar ist, welcher Bereich gerade bearbeitet wird.

Diese aus dem Stand der Technik bekannte Editiersoftware gibt dem Bediener bei der Montage der Seiten jedoch keine Hilfestellung, wie er die Seiten anzuordnen hat, um zum einen möglichst viele Seiten auf einem Bogen anzuordnen und zum anderen eine problemlose Weiterverarbeitung beim Schneiden zu ermöglichen.

Die europäische Patentanmeldung EP 2 857 955 A1 zeigt ein Verfahren zur Planung von digitalen Bildern für den Druck auf Druckmedien von der Rolle. Das Verfahren zeichnet sich dadurch aus, dass auf einem Bildschirm in einer Zeitschiene die auf dem aufgerollten Druckmaterial aufzubringenden digitalen Bilder angezeigt werden, so dass der Bediener einer Rollendruckmaschine jederzeit weiß, wie viele Bilder noch auf das rollenförmige Druckmaterial passen, bevor er neues Druckmaterial in die Druckmaschine einlegen muss. Weiterhin werden der Anfangszeitpunkt des Druckvorgangs und der Endzeitpunkt auf dem Bildschirm angezeigt sowie das Ende einer Rolle. Auf diese Art und Weise kann der Bediener der Druckmaschine jederzeit erkennen, wie viele Bilder er noch mit der eingelegten Drucksubstratrolle drucken kann, bevor er eine neue Rolle einlegen muss.

Aus der europäischen Patentanmeldung EP 2 390 842 A2 sind eine Vorrichtung und ein Verfahren zur Bearbeitung von digitalen Bildern bekannt, welche dem Planer eines Druckvorgangs eine Übersicht des Druckprozesses ermöglichen. Dabei werden auf mehreren Feldern eines Bildschirms unterschiedliche Bereiche angezeigt, welche unter anderem verkleinerte Bilder in Form von Thumbnails von zu druckenden Bildern auf dem Bildschirm anzeigen. Diese verkleinerten Bilder kann der Drucker mittels "Drag and Drop" auf einen Bereich am Bildschirm ziehen, um so die Bilder für den Druckvorgang frei zu geben. Auf diese Art und Weise kann der Drucker die Reihenfolge der zu druckenden Bilder festlegen.

Die Offenlegungsschrift US 2010/0199227 A1 zeigt eine Bedienoberfläche zur Erstellung von digitalen Bildcollagen aus Digitalbildern von Fotokameras. Auf diese Art und Weise können anhand von in den digitalen Bildern vorhandenen Daten wie Ort, Datum und Zeit automatisch z. B. chronologische Geschichten eines Urlaubs erstellt und mit den digitalen Fotos bebildert werden. Dabei kann der Nutzer verkleinerte Bilder in Form von Thumbnails mit reduzierter Auflösung aus einem Katalogbereich in einen Collagenbereich ziehen, wodurch dann automatisch eine entsprechende Collage in Form von z.B. einer chronologischen Geschichte hergestellt wird. Weiterhin ist die dabei genutzte Software in der Lage, Vorschläge zu machen, welche Bilder sich am besten für die geplante Collage eignen. Dabei können die digitalen Fotos automatisch beschnitten und auch verbessert werden, so dass der Bildeindruck verbessert wird.

Eine weitere Vorrichtung zur Anzeige digitaler Bilder geht aus der Offenlegungsschrift US 2010/0164992 A1 hervor, welche es ermöglicht, Bilder auf einem Bildschirm nach bestimmten Vorgaben zu platzieren und anzuzeigen. Dabei wird vermieden, dass sich Bilder unterschiedlicher Formate überschneiden und so teilweise verdecken. Zu diesem Zweck wird bei allen digitalen Bildern analysiert, ob diese horizontal oder vertikal von einer digitalen Fotokamera aufgenommen worden sind und entsprechend auf dem Bildschirm angezeigt werden sollen. In Abhängigkeit dieser Analyse werden passende Templates ausgewählt, welche eine Anordnung der Bilder auf dem Bildschirm ermöglichen, so dass sämtliche Bilder korrekt dargestellt werden und unverdeckt sichtbar sind. Auch bei diesem Verfahren kann der Nutzer stark verkleinerte Bilder aus einem Bereich per "Drag-and-Drop" auf den Planungsbereich ziehen, woraufhin dann die Vorrichtung diese Bilder analysiert und das passende Template auswählt.

Ein weiteres Beispiel einer automatischen Montage eines Druckauftrags in einer Bahndruckmaschine ist der Schrift WO 2014/206496 A1 zu entnehmen.

Es ist daher Aufgabe der vorliegenden Erfindung, ein Verfahren zum Herstellen von Druckprodukten mittels einer Druckmaschine mit einem Rechner, einem Bildschirm und einer Eingabeeinrichtung zu schaffen, welche dem Bediener das sinnvolle Anordnen von Seiten auf einem Bogen erleichtert. Auf diese Art und Weise können auch Bediener mit wenig Erfahrung in der Seitenmontage Seiten auf einem zu druckenden Bogen sinnvoll anordnen. Erfindungsgemäß wird die vorliegende Aufgabe durch Patentanspruch 1 gelöst, vorteilhafte Ausgestaltungen der vorliegenden Erfindung ergeben sich aus den Unteransprüchen, der Beschreibung und den Figuren.

Die vorliegende Erfindung gibt dem Bediener erstmals die Möglichkeit, auch ohne große Vorkenntnisse zu druckende Seiten eines Druckauftrags auf einem Bogen sinnvoll anzuordnen. Dazu nutzt die vorliegende Erfindung eine Software, welche dem Bediener an einem Bildschirm auf der Bedienoberfläche entsprechende Hilfestellungen gibt. Dieser Bildschirm kann zu einem Rechner in der Druckvorstufe gehören, er kann aber auch Teil der Druckmaschine selbst sein. Auf dem zugehörigen Rechner läuft dabei eine Software, welche den Bediener dann am Bildschirm führt. Als Eingabeeinrichtung kommen insbesondere ein Touchscreen oder eine Computermouse sowie andere Computereingabegeräte zum Einsatz. Auch eine Sprach- oder Gestenbedienung als Eingabeeinrichtung ist möglich. Vorteilhafterweise werden die zu druckenden Seiten eines Druckauftrags auf dem Bildschirm mittels des bei Computern üblichen und visuell einfach zu handhabenden Drag-and-Drop-Verfahrens angeordnet. Dabei zieht der Bediener über eine Eingabeeinrichtung wie eine Computermouse eine erste zu druckende Seite eines Druckauftrags in eine durch den dem Bildschirm zugeordneten Rechner vorgegebene Ecke eines zu druckenden Bogens. Grundsätzlich kann der Rechner jede beliebige Ecke vorgeben, bevorzugt wird jedoch die linke, obere Ecke des Bogens vorgegeben. Dies bedeutet, dass der Benutzer die erste zu druckende Seite nur in dieser vorgegebenen Ecke ablegen kann, andernfalls akzeptiert die Software den Eingabevorgang nicht und führt die Anordnung der Seite nicht durch. Es wird dann eine entsprechende Fehlermeldung auf der Bedienoberfläche angezeigt. Weitere zu druckende Seiten, die der Bediener ebenfalls per Drag-and-Drop-Verfahren auf die Bedienoberfläche des Bildschirms zieht, werden von dem Rechner auf einer gemeinsamen Linie angeordnet. Dadurch wird sichergestellt, dass es bei den angeordneten Seiten eine gemeinsame Schnittkante gibt, an welcher später bei der Druckweiterverarbeitung entsprechend geschnitten werden kann. Wenn der Bediener weitere zu druckende Seiten auf der Bildschirmoberfläche anordnen möchte, so lässt der Rechner ausschließlich ein Positionieren neben bereits positionierten zu druckenden Seiten zu. Dies bedeutet, dass der Bediener keine Lücken oder Abstände zu bereits positionierenden zu druckenden Seiten lassen kann, so dass eine effiziente Anordnung auf dem Bogen sichergestellt wird. Um dem Bediener das Anordnen zu erleichtern und ihn nicht mit der verweigerten Durchführung von Positioniervorschlägen zu belästigen, werden dem Bediener auf der Bildschirmoberfläche des Bildschirms die jeweils zulässigen Positionen für weitere zu druckende Seiten in Form einer Markierung angezeigt. Damit weiß der Bediener immer sofort, wo er weitere zu druckende Seiten ablegen kann. Wenn der Bediener alle zu positionierenden Seiten auf der Bildschirmoberfläche abgelegt hat, kann er den Eingabevorgang abschließen und den Bogen für den Druck freigeben. Auf diese Art und Weise kann der Bogen mit den positionierten, zu druckenden Seiten an die Druckmaschine übertragen und dort abgearbeitet werden. Die

Übertragung an die Druckmaschine schließt bei Offset-Druckmaschinen auch den Vorgang der Herstellung von Druckplatten ein.

In einer ersten Ausgestaltung der vorliegenden Erfindung ist vorgesehen, dass die auf dem Bildschirm angezeigte Markierung für die zulässige Position ein Hotspot ist, bei dessen Berührung mit einer zu druckenden Seite diese automatisch ausschließlich nur in der vom Rechner vorgegebenen zulässigen Anordnung angeordnet wird. Diese Hotspots sind vom Bediener auf der Bildschirmoberfläche leicht zu erkennen und sorgen dafür, dass der Bediener die zu druckende Seite nicht falsch anordnen kann. Sobald der Bediener beim Anordnen einer zu druckenden Seite mittels Drag-and-Drop-Verfahren einen Hotspot berührt, wird die betreffende zu druckende Seite nur in der im Rechner hinterlegten genehmigten Art und Weise angeordnet. Eine falsche Anordnung von zu druckenden Seiten, welche zum Beispiel zu Schnittproblemen führen könnte, wird dabei zuverlässig vermieden. Die Hotspots auf der Bedienoberfläche sind entsprechend grafisch auffällig gestaltet, so dass sie dem Bediener sofort ins Auge fallen.

In einer weiteren Ausgestaltung der vorliegenden Erfindung ist vorgesehen, dass die Seiten so angeordnet werden, dass die jeweils linken, oberen Kanten der Seiten auf einer Linie liegen. Auf diese Art und Weise wird eine saubere Schnittlinie festgelegt und eine übersichtliche Positionierung ermöglicht.

Weiterhin ist vorteilhafterweise vorgesehen, dass die Seiten nach dem Positionieren in 90°-Schritten gedreht werden. Durch das Drehen der positionierten Seiten in 90°-Schritten kann eine möglichst optimale Ausnutzung des Bogens gewährleistet werden. Daher lässt die Software auch nachträglich ein Drehen in 90°-Schritten zu. Damit wird gewährleistet, dass zum einen der Bogen möglichst effizient genutzt wird und zum anderen nach wie vor eine saubere Schnittlinie vorhanden ist. Deshalb ist nur ein Drehen um 90°-Schritte und keinen anderen Winkel erlaubt.

In einer weiteren vorteilhaften Ausgestaltung der Erfindung ist vorgesehen, dass mit der Eingabeeinrichtung auswählbar ist, ob ein erster Schnitt senkrecht und ein zweiter Schnitt waagrecht vorgenommen werden, oder ob ein erster Schnitt waagrecht und ein zweiter Schnitt senkrecht vorgenommen werden. Diese Auswahlmöglichkeit erhöht die Flexibilität und ermöglicht eine Anpassung der Schnittvorgänge an den jeweiligen Maschinenpark in der Weiterverarbeitung. Der Bediener hat somit die Möglichkeit, zwischen zwei sinnvollen Schnittvorgängen zu wählen, die beide in Abhängigkeit des Maschinenparks Sinn machen, weitere unsinnige Schnittreihenfolgen sind jedoch ausgeschlossen. Dadurch wird der Bediener nicht mit Auswahlmöglichkeiten überfrachtet, die in der Praxis nicht sinnvoll sind, hat auf der anderen Seite aber die notwendige Flexibilität, zwischen zwei grundsätzlichen Schnittmodellen zu wählen. Grundsätzlich wird bei beiden Verfahren die Breite der dadurch entstehenden Spalten durch das breiteste Element definiert, während die Höhe der Zeilen durch das jeweils höchste Element definiert wird.

Vorteilhafterweise ist außerdem vorgesehen, dass der Rechner für die Positionierung der zu druckenden Seiten auf der Rückseite die jeweilige Anordnung der Seiten auf der Vorderseite des Bogens übernimmt. Damit wird sichergestellt, dass das Zellenformat der Vorderseite mit dem Zellenformat auf der Rückseite identisch ist und beim Schneiden der Seiten keine Probleme auftreten.

Weiterhin ist vorgesehen, dass eine bereits positionierte Rückseite um 180° drehbar ist. Durch das Drehen um 180° erhält der Bediener die Flexibilität, die Rückseite im Vergleich zur Vorderseite auf den Kopf zu stellen. Dies kann in Abhängigkeit des gewünschten Druckprodukts und der dabei genutzten Seitenbindung sinnvoll sein. Andere Drehungen als 180°, welche zwangsläufig dazu führen würden, dass Vorderseite und Rückseite nicht mehr beim Schnitt deckungsgleich sind, werden durch die vorliegende Erfindung jedoch ausgeschlossen. Auch dies sorgt wieder dafür, dass der Bediener bei der Anordnung der zu druckenden Seiten auf dem Bogen keine Schnittfehler machen kann.

In einer weiteren Ausgestaltung der vorliegenden Erfindung ist vorgesehen, dass eine beim Löschen einer bereits positionierten Seite entstehende Lücke durch den Rechner von unten aufgefüllt wird, wenn zunächst vertikal geschnitten wird, und dass eine beim Löschen einer bereits positionierten Seite entstehende Lücke durch den Rechner von rechts aufgefüllt wird, wenn zunächst horizontal geschnitten wird. Auf diese Art und Weise wird abhängig vom gewählten Schnittmodell sichergestellt, dass Lücken durch gelöschte Seiten geschlossen werden und keine unnötigen freien Flächen auf einem Bogen entstehen.

Des Weiteren ist vorgesehen, dass die Rückseiten entsprechend den Vorderseiten durch den Rechner gelöscht und verschoben werden. Auf diese Art und Weise wird sichergestellt, dass beim Löschen einer Vorderseite auf dem Bogen die dazu gehörende Rückseite ebenfalls gelöscht wird und die Lücken so geschlossen werden, dass die verbleibenden Vorder- und Rückseiten übereinander angeordnet bleiben und somit problemlos weiterverarbeitet werden können.

Bei der vorliegenden Erfindung ist es selbstverständlich auch möglich, dass die genannten Vorgänge zur Optimierung der Anordnung von Seiten nicht nur auf einen, sondern über mehrere Bogen hinweg stattfinden, so dass ein Löschen einer Seite auf dem ersten Bogen dazu führt, dass die Seiten von allen nachfolgenden Bogen entsprechend verschoben werden. Die vorliegende Erfindung kann auch in die Vorstufensoftware, wie zum Beispiel der Software Prinect der Heidelberger Druckmaschinen AG, integriert sein. Bei Digitaldruckmaschinen, insbesondere Digitaldruckmaschinen nach dem Tonerverfahren, kann das erfindungsgemäße Verfahren auch in das Bedienpult der Digitaldruckmaschine und dessen Rechner integriert werden. Auf diese Art und Weise wird dann das erfindungsgemäße Montage-Editor-Verfahren unmittelbar in die Digital-Druckmaschine und deren Bedienkonzept eingepasst.

Die vorliegende Erfindung wird nachfolgend anhand mehrerer Figuren näher beschrieben und erläutert. Es zeigen:
- Figur 1:: die Ansicht einer Bedienoberfläche auf dem Bildschirm eines Druckvorstufenrechners, welcher mit einer Druckmaschine verbunden ist,
- Figur 2:: die Ansicht der Bedienoberfläche nach Anordnung einer ersten Seite,
- Figur 3:: die Ansicht der Bedienoberfläche nach Anordnung von zwei Seiten und
- Figur 4:: die Bedienoberfläche mit allen auf einem Bogen angeordneten Seiten.

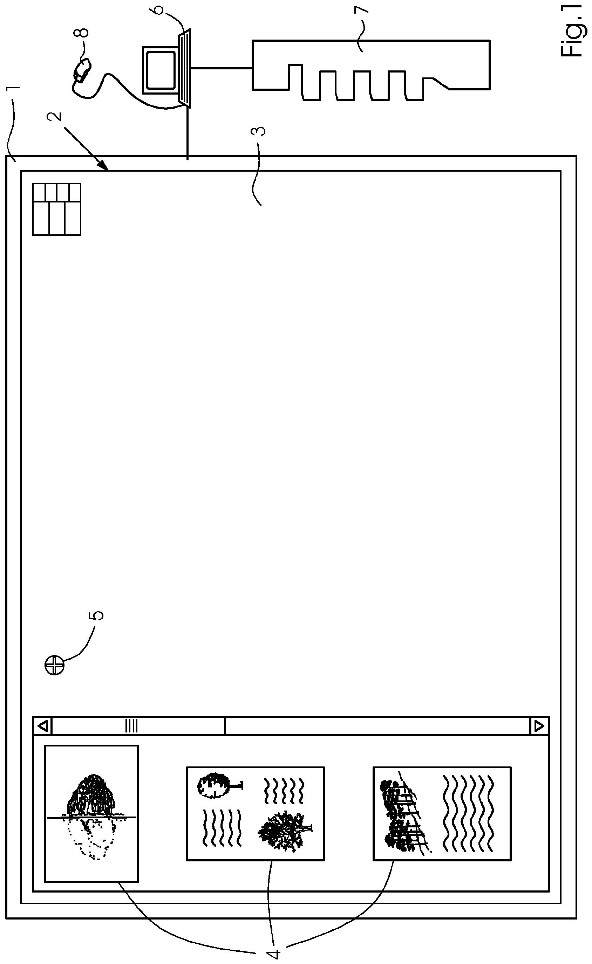

In Figur 1 ist groß die Bedienoberfläche 2 eines Bildschirms 1 zu sehen, welche mit einem Steuerungsrechner 6 verbunden ist. Der Steuerungsrechner 6 ist dabei bevorzugt ein Druckvorstufenrechner, auf dem bereits Druckvorstufensoftware läuft. Als Teil dieser Druckvorstufensoftware oder als separate Software läuft die vorliegende Erfindung auf dem Steuerungsrechner 6, während die Bedienoberfläche 2 dem Bediener das Anordnen von zu druckenden Seiten 4 auf einem Bogen 3 erleichtert. Der Bediener hat dabei die Möglichkeit, die Seiten 4 mittels einer Computermouse 8, welche an den Steuerungsrechner 6 angeschlossen ist, auf der Bedienoberfläche 2 zu platzieren. Der Steuerungsrechner 6 ist wiederum mit einer Druckmaschine 7 verbunden, so dass die fertig angeordneten Seiten 4 anschließend vom Steuerungsrechner 6 direkt an die Druckmaschine 7 gesendet und dort abgearbeitet werden können. Bei einer Offset-Druckmaschine ist zwischen der Druckmaschine 7 und dem Steuerungsrechner 6 noch ein hier nicht gezeigter Plattenbelichter angeordnet, welcher die fertig positionierten Seiten 4 auf die benötigten Druckplatten belichtet. Auf der Bedienoberfläche 2 sind am linken Rand anzuordnende Seiten 4 zu erkennen. Rechts neben den anzuordnenden Seiten 4 ist der leere Bogen 3 zu sehen, auf dem die Seiten 4 später angeordnet werden. Auf dem Bogen 3 ist in der linken oberen Ecke ein sogenannter Hotspot 5 zu sehen, auf dem die erste Seite 4 angeordnet sein kann. Dies bedeutet, egal welche Seite 4 der Bediener auch immer auf den leeren Bogen 3 zieht, wird durch den Hotspot 5 sichergestellt, dass die Seite 4 nur in der linken oberen Ecke angeordnet werden kann. Wenn der Bediener die Seite 4 an einer anderen Stelle des leeren Bogens 3 ablegen möchte, so wird die Ablage verweigert und/oder dem Bediener vom Steuerungsrechner 6 auf der Bedienoberfläche 2 eine entsprechende Meldung ausgegeben. Der Hotspot 5 ist optisch auffällig gestaltet, so dass dem Bediener sofort klar ist, wo er die nächste anzuordnende Seite 4 anzuordnen hat. Sobald der Bediener beim Ziehen einer Seite 4 den Hotspot 5 überstreicht oder berührt, wird die Seite 4 automatisch in der einzigen zulässigen Art und Weise angeordnet. Dies erleichtert die korrekte Anordnung der Seiten 4 sehr.

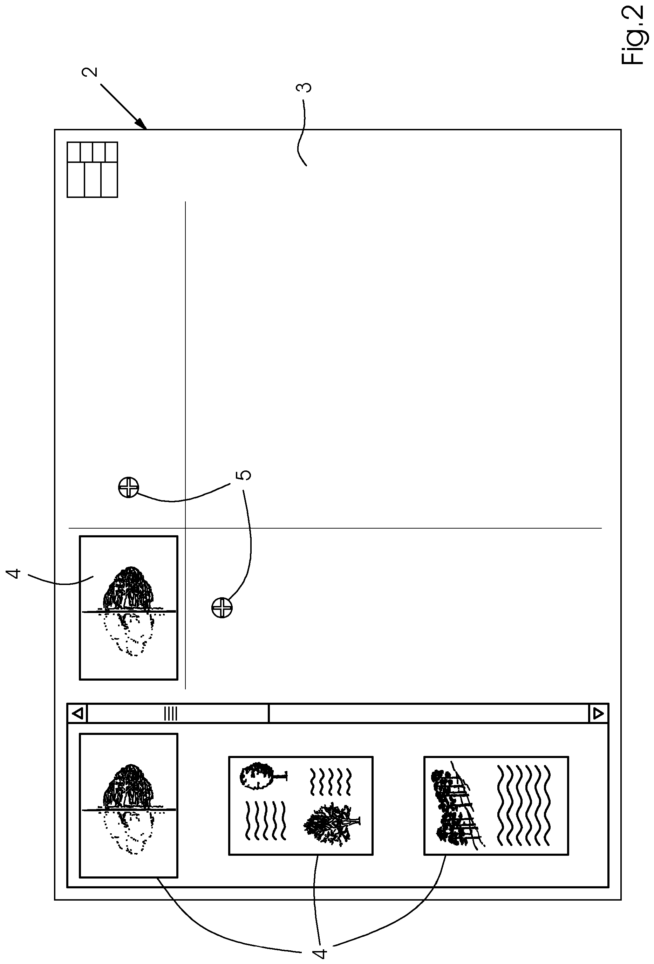

In Figur 2 ist zu erkennen, dass bereits eine erste zu druckende Seite 4 angeordnet ist, woraufhin der Steuerungsrechner 6 auf der Bedienoberfläche 2 des Bildschirms 1 weitere Hotspots 5 anzeigt, auf denen weitere zu druckende Seiten 4 angeordnet werden können. In Figur 2 ist zu erkennen, dass die Seiten 4 nur auf den beiden Hotspots 5 angeordnet werden können.

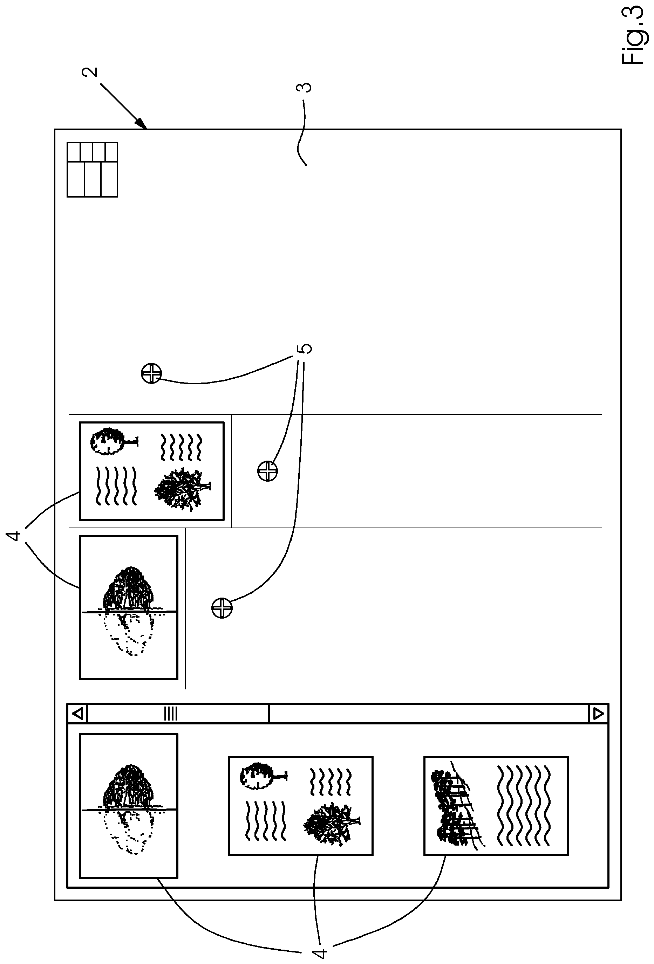

Ein weiterer Schritt ist in Figur 3 dargestellt, nachdem der Bediener eine zweite Seite 4 neben der ersten Seite 4 angeordnet hat. Im nächsten Schritt hat der Bediener nun drei Möglichkeiten, weitere Seiten 4 auf den in Figur 3 gezeigten drei Hotspots 5 anzuordnen.

Der Vorgang aus den Figuren 1 bis 3 wird solange fortgesetzt, bis entweder der Bogen 3 vollständig gefüllt ist oder keine anzuordnenden Seiten 4 im linken Bereich der Bedienoberfläche 2 mehr vorhanden sind. Falls ein Bogen 3 nicht ausreicht, so wird nach dem Fehlen eines ersten Bogens 3 auf der Bedienoberfläche 2 ein oder weitere zusätzliche Bogen 3 angezeigt.

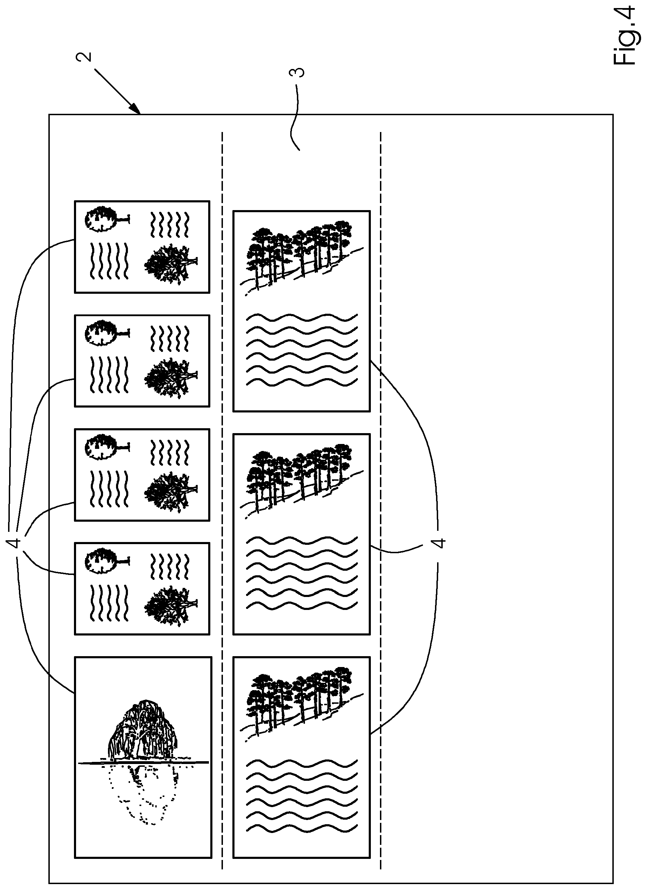

In Figur 4 ist zu erkennen, wie die angeordneten Seiten 4 am Ende des Anordnungsvorgangs aussehen. Alle Seiten 4 sind so angeordnet, dass sie an den gestrichelt eingezeichneten Schnittlinien anliegen. Auf diese Art und Weise wird ein korrektes Schneiden bei der Druckweiterverarbeitung sichergestellt.

Die vorliegende Erfindung ermöglicht so ein bequemes und sinnvolles Anordnen unter Berücksichtigung der in der Druckweiterverarbeitung benötigten Schnittlinien auch durch ungeübte Bediener, welche so am Bildschirm 1 mittels Drag-and-Drop-Verfahren auf der Bedienoberfläche 2 einfach Bogen 3 für den Druckvorgang füllen können. Die vorliegende Erfindung hilft dabei insbesondere unerfahrenen Bedienern, welche häufig Kleinformatdruckmaschinen, wie zum Beispiel Digital-Druckmaschinen nach dem Tonerverfahren, bedienen müssen.

### Bezugszeichenliste

- 1: Bildschirm
- 2: Bedienoberfläche
- 3: Bogen
- 4: Seiten
- 5: Hotspot
- 6: Steuerungsrechner
- 7: Druckmaschine
- 8: Computermouse

## Patentansprüche

1. Verfahren zum Herstellen von Druckprodukten mittels einer Druckmaschine (7) mit einem Rechner (6), einem Bildschirm (1) und einer Eingabeeinrichtung (8),
**dadurch gekennzeichnet,**
**dass** auf dem Bildschirm (1) eine erste zu druckende Seite (4) eines Druckauftrags in einer durch den Rechner (6) vorgegebenen Ecke eines Bogens (3) durch ein Drag-and-Drop-Verfahren mittels der Eingabeeinrichtung (8) angeordnet wird, dass eine von dem Rechner (6) vorgegebene Kante der ersten zu druckenden Seite (4) und weiterer zu druckender Seiten (4) durch den Rechner (6) auf einer gemeinsamen Linie angeordnet werden, dass die weiteren zu druckenden Seiten (4) von dem Rechner (6) ausschließlich neben bereits positionierten zu druckenden Seiten (4) als zulässigen Positionen angeordnet werden, dass der Rechner (6) auf dem Bildschirm (1) diese zulässigen Positionen für weitere zu druckende Seiten (4) in Form einer Markierung (5) anzeigt und dass der Bogen (3) mit den zu druckenden Seiten (4) nach Abschluss der Positionierung aller zu druckenden Seiten (4) an die Druckmaschine (7) übertragen und dort abgearbeitet wird.

2. Verfahren zum Herstellen von Druckprodukten nach Anspruch 1,
**dadurch gekennzeichnet,**
**dass** die auf dem Bildschirm (1) angezeigte Markierung für zulässige Positionen ein Hotspot (5) ist, bei dessen Berührung mit einer zu druckenden Seite (4) diese automatisch ausschließlich in der vom Rechner (6) vorgegebenen zulässigen Anordnung angeordnet wird.

3. Verfahren zum Herstellen von Druckprodukten nach Anspruch 1 oder 2,
**dadurch gekennzeichnet,**
**dass** die vom Rechner (6) vorgegebene Ecke des Bogens (3) die linke obere Ecke des Bogens ist.

4. Verfahren zum Herstellen von Druckprodukten nach Anspruch 3,
**dadurch gekennzeichnet,**
die Seiten (4) so angeordnet werden, dass die jeweils linken, oberen Kanten der Seiten auf einer Linie liegen.

5. Verfahren zum Herstellen von Druckprodukten nach einem der vorhergehenden Ansprüche,
**dadurch gekennzeichnet,**
**dass** die Seiten (4) nach dem Positionieren auf dem Bogen (3) in 90° Schritten gedreht werden.

6. Verfahren zum Herstellen von Druckprodukten nach einem der vorhergehenden Ansprüche,
**dadurch gekennzeichnet,**
**dass** mit der Eingabeeinrichtung (8) auswählbar ist, ob ein erster Schnitt senkrecht und ein zweiter waagrecht vorgenommen werden, oder ob ein erster Schnitt waagrecht und ein zweiter Schnitt senkrecht vorgenommen werden.

7. Verfahren zum Herstellen von Druckprodukten nach einem der vorhergehenden Ansprüche,
**dadurch gekennzeichnet,**
**dass** der Rechner (6) für die Positionierung der zu druckenden Seiten (4) auf der Rückseite die jeweilige Anordnung der Seiten (4) auf der Vorderseite des Bogens (3) übernimmt.

8. Verfahren zum Herstellen von Druckprodukten nach Anspruch 7,
**dadurch gekennzeichnet,**
**dass** eine bereits positionierte Rückseite um 180° drehbar ist.

9. Verfahren zum Herstellen von Druckprodukten nach einem der vorgehenden Ansprüche,
**dadurch gekennzeichnet,**
**dass** eine beim Löschen einer bereits positionierten Seite (4) entstehende Lücke durch den Rechner (6) von unten aufgefüllt wird, wenn zunächst vertikal geschnitten wird, und dass eine beim Löschen einer bereits positionierten Seite (4) entstehende Lücke durch den Rechner (6) von rechts aufgefüllt wird, wenn zunächst horizontal geschnitten wird.

10. Verfahren zum Herstellen von Druckprodukten nach Anspruch 9,
**dadurch gekennzeichnet,**
**dass** die Rückseiten entsprechend den Vorderseiten durch den Rechner (6) gelöscht und verschoben werden.

## Claims

1. Method of manufacturing printed products by means of a printing press (7) with a computer (6), a screen (1), and an input device (8),
**characterized in that**
on the screen (1), a first page (4) of a print job to be printed is arranged in a computer (6)-defined sheet (3) corner by a drag-and-drop process by means of the input device (8),
a computer (6)-defined edge of the first page (4) to be printed and further pages (4) to be printed are arranged on a common line by the computer (6),
the further pages (4) to be printed are arranged by the computer (6) exclusively in positions next to already positioned pages (4) to be printed as admissible positions, the computer (6) indicates these admissible positions for further pages (4) to be printed on the screen (1) in the form of a mark, and
the sheet (3) with the pages (4) to be printed is transmitted to the printing press (7) and processed after the positioning of all pages (4) to be printed has been completed.

2. Method of manufacturing printed products according to claim 1,
**characterized**
**in that** the mark displayed on the screen (1) to indicate admissible positions is a hotspot (5) and when the hotspot (5) is touched by a page (4) to be printed, the page (4) is automatically arranged exclusively in the admissible arrangement defined by the computer (6).

3. Method of manufacturing printed products according to claim 1 or 2,
**characterized**
**in that** the sheet (3) corner defined by the computer (6) is the upper left-hand corner of the sheet.

4. Method of manufacturing printed products according to claim 3,
**characterized**
**in that** the pages (4) are arranged in such a way that the respective upper left-hand edges of the pages are located on a line.

5. Method of manufacturing printed products according to any one of the preceding claims,
**characterized**
**in that** having been positioned on the sheet (3), the pages (4) are rotated in 90° increments.

6. Method of manufacturing printed products according to any one of the preceding claims,
**characterized**
**in that** the input device (8) is usable to select whether a first cut is made in a vertical direction and a second cut is made in a horizontal direction or whether a first cut is made in a horizontal direction and a second cut is made in a vertical direction.

7. Method of manufacturing printed products according to any one of the preceding claims,
**characterized**
**in that** to position the pages (4) to be printed on the back side, the computer (6) adopts the respective arrangement of the pages (4) on the front side of the sheet (3).

8. Method of manufacturing printed products according to claim 7,
**characterized**
**in that** a back side which has already been positioned is rotatable through 180°.

9. Method of manufacturing printed products according to any one of the preceding claims,
**characterized**
**in that** a gap which is created when an already positioned page (4) is deleted, the computer (6) fills the gap from the bottom when the initial cut is vertical and in that a gap which is created when an already positioned page (4) is deleted the computer (6) fills the gap from the right-hand side when the first cut is horizontal.

10. Method of manufacturing printed products according to claim 9,
**characterized**
**in that** the back sides are deleted and shifted by the computer (6) in accordance with the front sides.

## Revendications

1. Procédé de fabrication de produits imprimés au moyen d'une machine à imprimer (7) comportant un ordinateur (6), un écran (1) et un dispositif d'entrée (8),
**caractérisé en ce**
**qu'**une première page (4) à imprimer d'un travail d'impression est disposée sur l'écran (1) dans un coin d'une feuille (3) prédéterminé par l'ordinateur (6) par un procédé de glisser-déposer au moyen du dispositif d'entrée (8), en ce qu'un bord, prédéterminé par l'ordinateur (6), de la première page (4) à imprimer et des autres pages (4) à imprimer sont disposés sur une ligne commune par l'ordinateur (6), en ce que les autres pages (4) à imprimer sont disposées par l'ordinateur (6) exclusivement à côté des pages (4) à imprimer déjà positionnées, en ce que l'ordinateur (6) affiche sur l'écran (1) ces positions autorisées pour les autres pages (4) à imprimer sous la forme d'un marquage (5), et en ce que la feuille (3) avec les pages (4) à imprimer est transférée à la machine à imprimer (7) après achèvement du positionnement de toutes les pages (4) à imprimer et y est traitée.

2. Procédé de fabrication de produits imprimés selon la revendication 1,
**caractérisé en ce**
**que** le marquage des positions admissibles affiché sur l'écran (1) est une zone cliquable (5), au contact de laquelle une page (4) à imprimer est automatiquement positionnée exclusivement dans la disposition admissible prédéterminée par l'ordinateur (6).

3. Procédé de fabrication de produits imprimés selon la revendication 1 ou 2, **caractérisé en ce**
**que** le coin de la feuille (3) prédéterminé par l'ordinateur (6) est le coin supérieur gauche de la feuille.

4. Procédé de fabrication de produits imprimés selon la revendication 3,
**caractérisé en ce**
**que** les pages (4) sont disposées de telle sorte que les bords supérieurs gauches respectifs des pages se situent sur une ligne.

5. Procédé de fabrication de produits imprimés selon l'une des revendications précédentes,
**caractérisé en ce**
**que** les pages (4) sont tournées par pas de 90° après leur positionnement sur la feuille (3).

6. Procédé de fabrication de produits imprimés selon l'une des revendications précédentes,
**caractérisé en ce**
**que** l'on peut sélectionner avec le dispositif d'entrée (8) si une première coupe est effectuée verticalement et une deuxième coupe horizontalement, ou si une première coupe est effectuée horizontalement et une deuxième coupe verticalement.

7. Procédé de fabrication de produits imprimés selon l'une des revendications précédentes,
**caractérisé en ce**
**que** l'ordinateur (6) de positionnement des pages (4) à imprimer sur la face arrière reprend la disposition respective des pages (4) sur la face avant de la feuille (3).

8. Procédé de fabrication de produits imprimés selon la revendication 7, **caractérisé en ce**
**qu'**une face arrière déjà positionnée peut être tournée de 180°.

9. Procédé de fabrication de produits imprimés selon l'une des revendications précédentes,
**caractérisé en ce**
**qu'**un intervalle apparaissant lors de la suppression d'une page déjà positionnée (4) est comblé par le bas par l'ordinateur (6) si une découpe verticale est effectuée, et en ce qu'un intervalle apparaissant lors de la suppression d'une page déjà positionnée (4) est comblée par la droite par l'ordinateur (6) si une découpe horizontale est effectuée.

10. Procédé de fabrication de produits imprimés selon la revendication 9, **caractérisé en ce**
**que** les faces arrière sont supprimées et décalées par l'ordinateur (6) en fonction des faces avant.
